# EUROPEAN PATENT APPLICATION

(11) **EP 4 047 324 A1**
(43) Date of publication of application: **24.08.2022**
(21) Application number: 21275018.6
(22) Date of filing: 22.02.2021
(51) Int. Cl.: G01D 5/244, G01D 5/347

(54) **CONTAMINATION SHIELD**

(71) Applicant: Renishaw PLC, Wotton-under-Edge, Gloucestershire GL12 8JR (GB)
(72) Inventor: GEARING, Richard, David, James, Wotton-under-Edge, Gloucestershire GL12 8JR (GB)
(74) Representative: Rolfe, Edward William

(57) **Abstract**

An apparatus, comprising: a sealed encoder module comprising, a) a protective housing, and b) a relatively moveable member comprising a signal interacting part and a machine mount part, wherein the protective housing encapsulates at least the signal interacting part of the relatively moveable member to protect it from external contaminants, the protective housing having machine mount features for securing the protective housing to a first part of a machine and the machine mount part of the relatively moveable member comprises machine mount features located outside the protective housing for securing the relatively moveable member to a second, relatively moveable part of a machine; and at least one supplemental contamination shield for mounting to one of, or either of: i) the relatively moveable member, or ii) the protective housing.

## Description

This invention relates to a contamination shield for a sealed encoder module, as well as relating to a sealed encoder module having an associated supplemental contamination shield, along with a method of installing a sealed encoder module and a supplemental contamination shield.

Encoder apparatus are used in many industries to provide position (or its derivatives, e.g. velocity and/or acceleration) feedback to a control system of a machine, e.g. feedback control for the position/motion of one part of a machine relative to another part of the machine, along one or more predefined measuring dimensions (i.e. one or more measuring dimensions of the encoder apparatus). As will be understood and as is well known, typically a scale is provided on one part of the machine and a readhead for reading the scale is provided on the other part of the machine such that the relative position of scale and readhead, and hence the relative position of the machine parts, can be detected by the readhead along the encoder's measurement dimension.

The technologies utilised by such encoders can require that the environment in which they are used is clean and free of contamination, e.g. dust, dirt and moisture (which could, for example, be oil and/or water based). Contamination on the scale and/or readhead can adversely affect the performance of the encoder. In many industries such machines that use encoders operate in an appropriately clean environment, in which case what is commonly referred to as an "exposed encoder" (or "open encoder") can be used. Readheads of exposed/open encoders can comprise a visual set up indicator (e.g. see the TONiC^{™} and RESOLUTE^{™} encoders available from Renishaw plc, and see also US 5241173 and US 8505210).

However, there are instances, such as in the machine tool industry for example, where the working environment is not clean, and where contamination in the form of fluids and/or solid debris are prevalent. In such cases there can exist the need to protect the scale and readhead of an encoder against such detrimental environments. As is known, this can be achieved by attaching a cover to the machine over an installed exposed/open encoder, such as over a TONiC^{™} or RESOLUTE^{™} encoder available from Renishaw plc, so as to provide a barrier which protects the scale and readhead from such contamination. However, typically, in these circumstances, a different type of encoder is used which is commonly referred as a "sealed" encoder (also known as an "enclosed" encoder). Such sealed/enclosed encoders comprise a scale and a readhead, with an integral protective housing which encapsulates the scale and at least a scale signal receiving part of the readhead, and which together are provided and installed as a single module. Whilst it is known to try to further protect a sealed/enclosed encoder module from external contaminants by mounting an additional guard or cover to the part of the machine on which the integral protective housing is mounted, such solutions have been found to be inadequate, difficult to install, hinder replacement of the encoder module and/or potentially hinder performance of the encoder module.

The present invention provides an improved solution, for instance to an improved contamination shield and improved sealed encoder module.

According to a first aspect of the present invention there is provided an apparatus, comprising: a sealed encoder module comprising a) a protective housing, and b) a relatively moveable member comprising a signal interacting part and a machine mount part. The protective housing encapsulates at least the signal interacting part of the relatively moveable member to protect it from external contaminants. The protective housing has machine mount features for securing the protective housing to a first part of a machine. The machine mount part of the relatively moveable member comprises machine mount features for securing the relatively moveable member to a second, relatively moveable part of a machine. The apparatus further comprises at least one supplemental contamination shield for mounting to one of, or either of: a) the protective housing or b) the relatively moveable member

Providing a supplemental contamination shield in accordance with the invention, provides a convenient and effective way of protecting the encoder module from contamination, and in particular helps provide additional protection from contamination getting inside the (integral) protective housing. A particular advantage of the present invention is that the contamination shield is supplemental to the sealed encoder module (and so is not integral to the sealed encoder module). Accordingly, the sealed encoder module could function fully without the supplemental contamination shield present, but it has been found that providing such a supplemental contamination shield can be helpful from protecting the encoder module from solid debris as well as can help to provide additional protection for the inside of the protective housing from liquid contamination, such as condensation, e.g. which might otherwise run along/down the outside of the protective housing and find its way into the inside of the protective housing. Providing the contamination shield as a supplemental member, can also help to aid replacement of the contamination shield. Accordingly, the supplemental contamination shield could be a sacrificial member which can be replaced separately from the enclosed encoder module.

Furthermore, configuring the apparatus such that the supplemental contamination shield is configured to be attached to the protective housing or the relatively moveable member, provides a convenient way of installing the supplemental contamination shield. It can also help to ensure that there is a predetermined fit between the supplemental contamination shield and the encoder module. This can help to improve the protective capabilities of the supplemental contamination shield, as well as help to ensure that the supplemental contamination shield does not interfere with the performance of the sealed encoder module.

It can be preferred that the supplemental contamination shield does not contact the other part of the encoder module to which is not attached. For example, if the supplemental contamination shield is attached to the protective housing, it can be preferred that the supplemental contamination shield does not contact the relatively moveable member (and vice versa). In other words, it can be preferred that the supplemental contamination shield is configured to contact/touch only one of the protective housing and the relatively moveable member. This can help to avoid rubbing and friction during relative movement of the relatively moveable member and protective housing. Accordingly, preferably the encoder module and supplemental contamination shield are configured such that there is a gap between the supplemental contamination shield and the part to which it is not attached/anchored.

Although the machine mount part of the relatively moveable member could be located inside the protective housing, this would require the machine itself to have a mounting bracket that is inserted into the protective housing and connected to the machine mount part inside the protective housing. Accordingly, preferably, the machine mount part of the relative moveable member is located outside the protective housing.

As will be understood, the protective housing and relatively moveable member could be configured to be releasably fastened to their respective parts of a machine. A machine mount feature could comprise, for example, a hole into and/or through which a releasable fastener (e.g. a bolt) can pass (and optionally engage). The machine mount part of the relative moveable member could be described as a mounting block.

Although the apparatus could be configured such that the supplemental contamination shield could be attached to the relatively moveable member (e.g. to a part of the relatively moveable member located outside the protective housing, e.g. to the machine mount part of the relatively moveable member), it can be preferred that the apparatus is configured such that the supplemental contamination shield is configured to be attached to the protective housing. In other words, the at least one supplemental contamination shield can be configured for mounting to the relatively moveable member, although preferably the at least one supplemental contamination shield can be configured for mounting to the protective housing. The at least one supplemental contamination shield can be configured for mounting to the protective housing via features separate to the protective housing's machine mount features. This can help facilitate installing of the supplemental contamination shield after the encoder module has been installed on the machine, without interfering with the installation of the encoder module on the machine. It can also help replacement of the supplemental contamination shield, without interfering with the installation of the encoder module on the machine.

The supplemental contamination shield and one of, or both of: i) the relatively moveable member (e.g. the machine mount part of the relatively moveable member), and ii) the protective housing, could comprise complementary shield mount features for enabling/facilitating the supplemental contamination shield to be attached thereto. As per the above paragraph, it can be preferred that the protective housing comprises such shield mount features. Accordingly, preferably the supplemental contamination shield and the protective housing comprise complementary shield mount features for enabling/facilitating the supplemental contamination shield to be attached to the protective housing. In either case, preferably the protective housing's (or the relatively moveable member's) shield mount features are separate to its machine mount features. As will be understood, the protective housing's (or the relatively moveable member's) machine mount features are those features on the protective housing or readhead via which it is mounted to its respective part of the machine. Such features could comprise, for example, one or more holes for receiving a fastener, such as a bolt.

Preferably, the supplemental contamination shield is configured to extend along the measuring dimension of the encoder apparatus. The supplemental contamination shield can comprise an elongate member (e.g. a plate-like member), configured such that its length extend along the measuring dimension of the encoder apparatus when mounted thereto. In the embodiments in which the supplemental contamination shield is mounted to the protective housing, the supplemental contamination shield could be configured to extend along only a small proportion of the full extent/length of the protective housing. For instance, if it is expected/known for there to be higher levels of contamination in one region along the extent of the protective housing, then a supplemental contamination shield could be provided which extends only in that region (e.g. its length and location on the protective housing is chosen so as to only provide protection in that region). For example, the supplemental contamination shield can extend along at least 5% of the extent/length of the protective housing, advantageously along at least 25% of the extent/length of the protective housing, optionally along at least 50% of the extent/length of the protective housing, for instance along at least 75% of the extent/length of the protective housing, for example along substantially the entire extent/length of the protective housing. Optionally, multiple supplemental contamination shields could be provided, such that they can be mounted at different locations along the extent/length of the protective housing.

The supplemental contamination shield can be configured such that when it is mounted on the sealed encoder module it can extend at least partly over both the protective housing and the relatively moveable member (in particular a part of the relatively moveable member which is outside the protective housing, e.g. the machine mount part of the relatively moveable member) so as to cover the gap between them. In other words, the width of the supplemental contamination shield (which will extend perpendicular to the length/extent of the protective housing/measuring direction when installed on the encoder apparatus) is sufficiently wide so as to at least partially cover the protective housing and the relatively moveable member (in particular the part of the relatively moveable member which is outside the protective housing, e.g. the machine mount part of the relatively moveable member).

The supplemental contamination shield can comprise an anchor portion for mounting to one of, or either of: i) the protective housing or ii) the relatively moveable member (e.g. a part of the relatively moveable member which is outside the protective housing, e.g. the machine mount part of the relatively moveable member), and a skirt portion which is suspended therefrom. The anchor portion can comprise shield mount features configured to engage complimentary features on one of, or either of: i) the protective housing and ii) the relatively moveable member and the relatively moveable member (in particular a part of the relatively moveable member which is outside the protective housing, e.g. the machine mount part of the relatively moveable member). The anchor and skirt portions can be arranged such that when the anchor portion is mounted on either i) the relatively moveable member part of the sealed encoder module, or ii) the protective housing part of the sealed encoder module, the skirt portion extends so as to at least partly cover the other part on which it is not mounted.

The apparatus can be configured such that the supplemental contamination shield can be releasably fastened/attached to the encoder module, e.g. to the protective housing or to the relatively moveable member (in particular a part of the relatively moveable member which is outside the protective housing, e.g. the machine mount part of the relatively moveable member). For example, the apparatus could be configured such that the supplemental contamination shield can be secured to the encoder module via releasable fasteners, e.g. bolts. Preferably, the apparatus is configured such that the at least one supplemental contamination shield and one of, or both of, i) the relatively moveable member (in particular the part of the relatively moveable member which is outside the protective housing, e.g. the machine mount part of the relatively moveable member), and ii) the protective housing, have integral complementary shield mount features for enabling the supplemental contamination shield to be attached thereto (i.e. without additional fasteners provided separate to the relatively moveable member and protective housing). For example, the integral complementary shield mount features could comprise complimentary male and female parts which can fit together. Preferably, the complementary shield mount features are configured such that the supplemental contamination shield can be press-fitted (or "snap-fitted") onto the i) the relatively moveable member, or ii) the protective housing. Preferably, the complementary shield mount features are configured such that the supplemental contamination shield can be press-fitted (or "snap-fitted") onto the i) the relatively moveable member, or ii) the protective housing by forcing them together in a direction perpendicular to the measuring dimension of the encoder module (e.g. a direction perpendicular to the extent/length of the protective housing). This can aid installation of the supplemental contamination shield onto the encoder module after the sealed encoder module has been installed on the machine, especially when space at the ends of the sealed encoder module is limited.

The supplemental contamination shield can comprise an extruded form/material (e.g. plastic/aluminium). Optionally, the supplemental contamination shield can be formed from sheet material, which could be mechanically formed into shape, e.g. via cutting, bending and/or folding. Optionally, the supplemental contamination shield could formed via a moulding process.

The sealed encoder module can be a linear encoder module (as opposed to a rotary encoder module). Accordingly, the sealed encoder module could comprise a linear scale within the protective housing.

The protective housing can comprise a closed, substantially tubular, form. The cross-sectional shape of said tubular protective housing need not necessarily be round, but for example could comprise other regular or irregular shapes. For example, the cross-section shape of said tubular protective housing could be substantially rectangular. As mentioned above, a gap/slot can extend along the length of the tubular form. As will be understood, the protective housing could be configured such that in use it is a single fixed unit (i.e. it does not comprise parts which move relative to each other, e.g. with the movement of the relatively moveable parts of the machine on which it is mounted).

The relatively moveable member's signal interacting part which is located inside the protective housing can be connected to the relatively moveable member's machine mount part which is (preferably) located outside of the protective housing, via an intermediate member. The intermediate member could pass through a slot in the protective housing (e.g. which extends along the length of the protective housing). The intermediate member can comprise a blade-like (or "blade") member. The blade-like member could comprise first and second edges (in other words, leading and trailing edges). The blade-like member could be tapered towards the first and second edges. The intermediate member (e.g. the blade-like member) could comprise an internal passageway/channel for wires and/or air to pass through between the inside and outside of the protective housing, for example between the scale signal part and the machine mount part.

The protective housing can be elongate. The protective housing can comprise a substantially tubular form, in particular a closed tubular form (i.e. having closed ends). Accordingly, the protective housing could be referred to as a tubular protective housing. The cross-sectional shape of said tubular protective housing need not necessarily be round, but for example could comprise other regular or irregular shapes. For example, the cross-section shape of said tubular protective housing could be substantially rectangular. Optionally, the protective housing is round, for example circular, for instance ring-shaped. The protective housing can be substantially straight.

The protective housing can comprise a seal through which the signal interacting part of the relatively moveable member can be connected to a part outside the protective housing. The seal could protect the inside of the protective housing from external contamination entering through the aforementioned slot in the protective housing. For instance, the aforementioned intermediate member (which connects the relatively moveable member's signal interacting part which is located inside the protective housing, and the relatively moveable member's machine mount part which is located outside of the protective housing) could pass through the seal. As will be understood, the seal can permit relative movement of the relatively moveable member and the protective housing along the measuring dimension of the encoder apparatus. Accordingly, the seal can extend along the measuring dimension. The seal could also accommodate some relative movement of the relatively moveable member and the protective housing in other dimensions.

The seal could be provided by a flow of gas, e.g. across a slot in the protective housing, and/or for example via a positive (e.g. air) pressure inside said protective housing. Preferably, the seal comprises a physical barrier. The seal could comprise a plurality, for example a pair, of seal members. For example, the seal could comprise a plurality (e.g. a pair) of sealing lips (e.g. which could be elongate). Accordingly, the seal can comprise at least one pair of sealing lips. Accordingly, for example, the above-mentioned intermediate member could pass through the seal, e.g. between the sealing lips.

Optionally, the seal (e.g. the sealing lips) is (are) compliant, or in other words, "non-rigid". Optionally, the seal (e.g. the sealing lips) is (are) elastic. For example, the seal (e.g. the sealing lips) is (are) sufficiently compliant so as to enable the relative movement of the scale/protective housing and the signal receiver part (in particular by permitting the member, e.g. blade-like member, and the protective housing/seal to move relative to each other). Optionally, the seal (e.g. the sealing lips) is (are) biased toward a sealed configuration, e.g. by way of their elasticity. The seal (e.g. the sealing lips) could comprise, for example, polyurethane, such as thermoplastic polyurethane, and/or fluorinated elastomer.

The encoder apparatus could comprise a magnetic, inductive, capacitive, and/or optical encoder apparatus. For example, the scale could comprise magnetic, inductive, capacitive, and/or optical scale. Optionally, the encoder apparatus comprises an optical encoder apparatus.

The sealed encoder module could comprise a laser-interferometer type encoder module. For instance, the signal interacting part of the relatively moveable member could comprise an optical element (e.g. a mirror or retroreflector) for returning a laser beam to a sensor fixed to the protective housing. Preferably, the sealed encoder module is a scale-based sealed encoder module. Accordingly, the sealed encoder module can comprise a scale located inside the protective housing, such that the scale is protected from external contaminants. The scale can comprise a series of features provided along its length/extent. In this case, the relatively moveable member could be a readhead or "readhead assembly" (the terms "readhead" and "readhead assembly" are used interchangeably within this document). In this case, the signal interacting part can be referred to as a signal receiver part.

Accordingly, as will be understood, the signal interacting part can be the part of the relatively moveable member located inside the protective housing which interacts with (e.g. receives) a signal. The signal can be dependent on/affected by the relative position and/or motion of the relatively moveable member and protective housing (i.e. and therefore dependent on the relative position and/or motion of the first and second relatively moveable parts of the machine on which they are mounted). For example, in the case of a scale-based encoder, the signal interacting (i.e. receiver) part can be the part of a readhead/readhead assembly which is located inside the protective housing which receives a signal from a scale located inside the protective housing (in which case the "signal" could be referred to as the "scale signal"). The signal receiver part can comprise one or more components for interacting with the signal, e.g. so as to detect the signal and/or manipulate the signal before it is subsequently detected.

In the case of an optical encoder, the signal receiver part can comprise one or more optical elements, such as reflective, diffractive and/or refractive optical elements. For example, the signal receiver part can comprise one or more mirrors, lenses, and/or one or more diffraction gratings. The signal receiver part could comprise one or more signal guides for guiding the signal to another component. For example, in the case of an optical encoder, the signal receiver part could comprise a wave guide, e.g. a light guide (for instance, an optical fibre). The signal guide could be configured to carry the signal to a subsequent component which interacts with the signal, e.g. so as to manipulate the signal. The signal guide could be configured to carry the signal to one or more detectors/sensors configured to detect the signal, e.g. a transducer.

Optionally, the relatively moveable member (e.g. the readhead) comprises one or more sensors for sensing the signal (which as described above may or may not have been manipulated by one or more components in the readhead). The sensor could comprise a plurality of sensor elements, e.g. an array of sensor elements. The signal interacting (e.g. receiver) part of the readhead could comprise the sensor(s). Optionally, the sensor could be located elsewhere in the relatively moveable member (e.g. the readhead). For example, the sensor could be located in a part of the relatively moveable member (e.g. the readhead) which is located outside the protective housing. For example, the sensor (and indeed any other components mentioned above) could be located in the machine mount part of the relatively moveable member (e.g. the readhead).

The relatively moveable member (e.g. the readhead) can comprise one or more emitters for emitting energy (e.g. toward a scale located in the protective housing). For example, the relatively moveable member (e.g. the readhead) can comprise at least one light source configured to emit light (e.g. to illuminate a scale) (e.g. light in the infra-red to ultraviolet range). The signal interacting (e.g. receiver) part can comprise said one or more emitters. Optionally, said one or more emitters can be provided by another part of the relatively moveable member (e.g. readhead) (e.g. outside the protective housing, such as provided by the machine mount part of the relatively moveable member/readhead).

Optionally, the readhead, e.g. the signal receiver part, (for instance its sensor(s)) is configured to detect a signal generated by light coming from a scale. Optionally the light has been transmitted through the scale. Preferably, the light has been reflected from the scale (reflected arrangements provide for a more compact configuration). Accordingly, optionally, the readhead, e.g. the signal receiver part, comprises an emitter (e.g. a light source) and a sensor. The emitter and sensor could be located on the same side of the scale. Accordingly, the encoder module can be a reflective encoder module.

As will be understood, a scale will have some form of features/markings which can be read by the readhead to determine displacement, position (or its derivatives, e.g. velocity and/or acceleration). Such features could define a pattern. For example, an incremental scale could comprise scale features/marks that define a periodic pattern and which can be used to generate a periodic signal at the readhead (e.g. when relative movement between the scale and the readhead takes place). The scale can be elongate. The scale can comprise a substrate in and/or on which the features/markings are formed.

Optionally, the encoder apparatus is a diffraction-based encoder apparatus. Optionally, the scale located in the protective housing comprises features configured to diffract light, which is then used to form a resultant signal on a sensor in the readhead. Optionally, the readhead comprises one or more optical elements configured to interact with light before and/or after the scale in order to form the signal on a sensor in the readhead. Optionally, the readhead comprises one or more lenses and/or one or more diffraction gratings. Optionally, the readhead comprises a diffraction grating configured to interact with light from the scale to form an interference fringe on a sensor in the readhead assembly. Optionally, the sensor comprises an electrograting comprising two or more sets of interdigitated sensors, each set being configured to detect a different phase of an interference fringe. Preferably, the signal receiver part comprises the readhead features mentioned in this paragraph.

Optionally, the scale comprises absolute scale features which define a (e.g. continuous) series of uniquely identifiable positions along the length of the scale.

Optionally, the readhead is configured to detect an image of the scale. Optionally, the readhead comprises one or more sensors suitable for capturing an image, e.g. one or more Charge-Coupled Devices (CCD) or Complementary Metal-Oxide-Semiconductor (CMOS) sensors. Optionally, the readhead (and preferably the signal receiver part) comprises at least one imaging optical element configured to form an image of the scale onto a sensor.

As will be understood, references to "optical" and references to "light" are intended to refer to electromagnetic radiation (EMR) in the ultraviolet to infra-red range (inclusive).

As will be understood, the encoder apparatus (e.g. the relatively moveable part/readhead) can be configured to determine and output information concerning the relative position of the signal interacting part and the protective housing (e.g. information concerning the relative position of the signal receiver part and a scale). Such information can be referred to herein as "position information". Preferably, the encoder apparatus (e.g. the relatively moveable part/readhead) comprises one or more processor devices configured to process the output from one or more sensors/detectors, e.g. so as to form said position information. The position signal can be incremental position information. For example, the position signal can comprise a quadrature signal. Optionally, the position signal comprises absolute position information. Said one or more processor devices could be located in the signal interacting (e.g. receiver) part and/or in another part of the relatively moveable part (e.g. readhead) (e.g. in the machine mount part).

According to another aspect of the invention there is provided a supplemental contamination shield for a sealed encoder apparatus, comprising an elongate plate-like member having an anchor portion comprising one or more mount features arranged along the length of the elongate plate-like member for connecting the elongate plate-like member to a sealed encoder apparatus, and a skirt portion which is suspended therefrom. Features described above and below in connection with the other embodiments of the invention are also applicable to this aspect of the invention, and vice versa.

According to another aspect of the invention there is provided an apparatus an apparatus, comprising: a sealed encoder module comprising, a) a protective housing, and b) a relatively moveable member (e.g. a readhead/readhead assembly) comprising a signal interacting part (e.g. a signal receiver part) and a machine mount part, wherein the protective housing encapsulates at least the signal interacting part of the relatively moveable member to protect it from external contaminants, the protective housing having machine mount features via which the protective housing is secured to a first part of a machine and the machine mount part of the relatively moveable member comprises machine mount features via which the relatively moveable member is secured to a second, relatively moveable part of a machine; and at least one supplemental contamination shield mounted to either a) the protective housing or b) the relatively moveable member. Accordingly, the apparatus comprises a machine comprising first and second relatively moveable parts. Features described above and below in connection with the other embodiments of the invention are also applicable to this aspect of the invention, and vice versa.

According to another aspect of the invention there is provided a method of installing a sealed encoder module which comprises i) a protective housing and ii) a relatively moveable member (e.g. a readhead/readhead assembly) comprising a signal interacting part (e.g. a signal receiver part) and a machine mount part, wherein the protective housing encapsulates at least the signal interacting part to protect it from external contaminants, the protective housing having machine mount features for securing the protective housing to one part of a machine and wherein the machine mount part of the relatively moveable member comprises machine mount features for securing the relatively moveable member to another part of a machine, the method comprising: in either order, mounting the protective housing to a first part of a machine via its machine mount features and mounting the relatively moveable member to the machine via the machine mount features on the machine mount part; and then attaching at least one supplemental contamination shield to the protective housing or to the relatively moveable member. Features described above and below in connection with the other embodiments of the invention are also applicable to this aspect of the invention, and vice versa.

Embodiments of the invention will be described, by way of example only, with reference to the accompanying drawings in which:
Figure 1 illustrates a sealed encoder which can be used with a supplemental contamination shied according to the present invention;
Figure 2 is a cross-sectional view of the sealed encoder shown in Figure 1;
Figure 3 shows a supplemental contamination shield according to the present invention attached to the sealed encoder of Figure 1;
Figure 4 is an end view of the apparatus shown in Figure 3;
Figure 5 is a cross-sectional view of the supplemental contamination shield shown in Figures 3 and 4;
Figure 6 shows a supplemental contamination shield according to the present invention attached to a sealed encoder;
Figure 7 is a cross-sectional view of the apparatus shown in Figure 6; and
Figure 8 shows cross-sectional views of the sealed encoder and supplemental contamination shield of Figure 6.

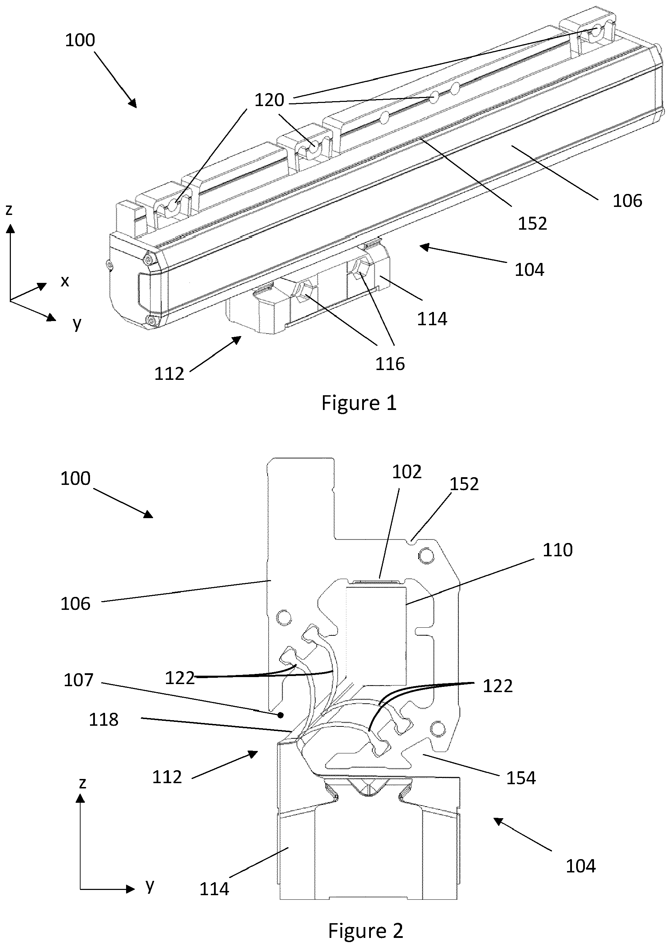

Referring to Figure 1 and 2 there is shown a sealed linear encoder module 100 comprising a scale 102 (Figure 2), a readhead assembly 104 and an integral protective housing 106 having a substantially tubular form.

In the embodiment described, the scale 102 is an elongate linear scale. Along its length it has a plurality of features (not shown) which can be read by the readhead assembly 104. The scale reading can be used to determine relative position (and/or motion) (and/or its derivatives) of the scale and readhead assembly. In particular, the readhead assembly 104 can produce signals in response to its reading of the scale 102, which can be output to an external processing device which can use the signals to determine relative position (and/or motion) (and/or its derivatives). For example, the external processing device could be a machine controller, which can use the information from the readhead assembly 104 to determine how to control the relatively moveable parts of a machine.

In the embodiment described, the sealed encoder module 100 is an optical encoder. In particular, the readhead assembly 104 utilises electromagnetic radiation (EMR) in the infra-red to ultraviolet range in order to read the scale 102. The encoder apparatus need not be an optical encoder; for example, the encoder apparatus could be a magnetic encoder, or for instance an inductive encoder. Furthermore, the sealed encoder module could be what is referred to as an absolute encoder or incremental encoder. In another embodiment, there need not necessarily be a scale member 102. For instance, the encoder could be a laser interferometer encoder.

In a known way, the readhead assembly 104 can communicate with an external processor device (not shown), e.g. a controller, via a communications channel. Such a communications channel normally comprises a physical connection (e.g. cable - not shown), but could be a wireless connection. Power to the readhead assembly 104 can also be supplied via a physical connection, e.g. via the cable. However, this need not necessarily be the case. For example, the readhead assembly 104 could comprise an internal power source such as a battery.

As shown in Figure 2, the readhead assembly 104 comprises a scale signal receiver part 110 for receiving a signal from the scale and a machine mount part 112, which in this embodiment comprises a mounting block 114 and a blade 118 (explained in more detail below).

The scale 102 and scale signal receiver part 110 of the readhead assembly 104 are located inside the protective housing 106 which protects them from contaminants external to the protective housing. The scale signal receiver part 110 can move along the length of the scale 102 within the protective housing 106. The scale 102 is formed on a piece of material separate from, but is fixed to (e.g. via adhesive), the protective housing 106.

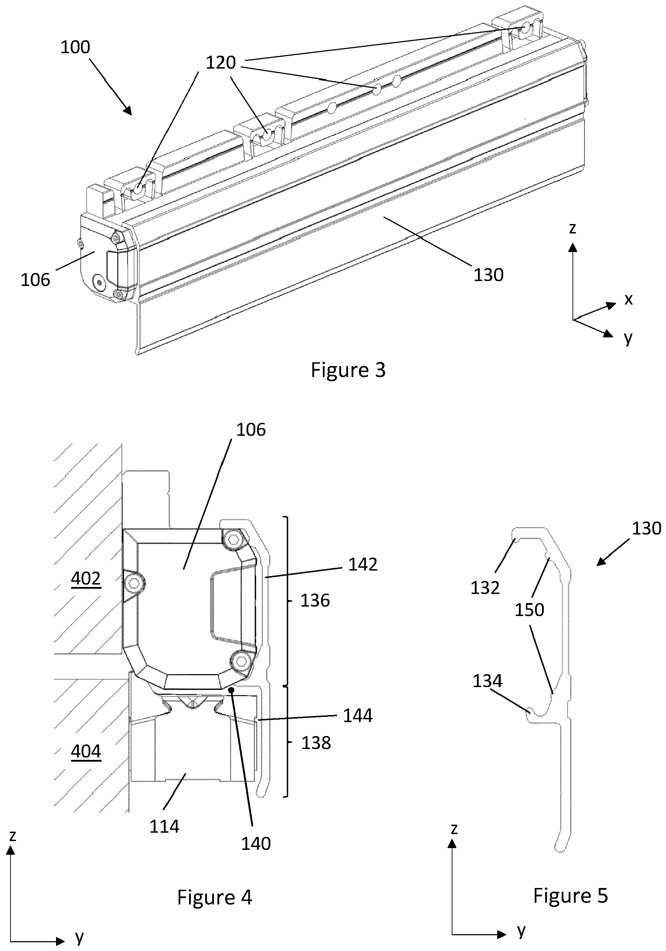

The protective housing 106 has machine mount features 120, such that in use, the protective housing 106 can be secured to a first part 402 of a machine (see Figure 4). In this embodiment, the protective housing's 106 machine mount features comprise holes 120, through which one or more releasable fasteners such as a bolts, can pass through so as to bolt the protective housing 106 to a first part 402 of a machine.

Likewise, the readhead assembly's machine mount part 112 (and in particular, the mounting block 114) comprises machine mount features 116, such that in use, the readhead assembly 104 can be secured to a second part of a machine 404 (see Figure 4). In this embodiment the machine mount features comprise holes 116, through which one or more releasable fasteners such as a bolts, can pass through so as to bolt the mounting block 114 to a second part 404 of a machine.

As will be understood, the first 402 and second 404 parts of the machine will be relatively moveable with respect to each other.

The protective housing 106 further comprises an elongate slot 107 running along its length through which the readhead assembly's blade 118 can pass. The slot is sealed via two pairs of sealing lips 122 which seals the inside of the protective housing 108, such that the scale 102 and scale signal receiver 110 residing therein are protected from external contaminants. The blade 118 passes between the sealing lips 122. The sealing lips 122 are compliant so as to be able to part so as to allow the movement of the blade 118 and hence the scale signal receiver 110 along the length of the protective housing 106 and hence the scale 102, but are also sufficiently elastic so as to close together around the blade 118, thereby forming a physical barrier to solid and fluid (in particular liquid and moisture) contaminants. In other words, the blade 118 prises the sealing lips 122 apart as it moves along the length of the seal, between the sealing lips 122, and the sealing lips have sufficient elasticity so as to close together in the absence of the blade 118.

In the embodiment shown and described, the arrangement of the scale signal receiver 110 within the protective housing is independent of the scale 102 and the protective housing 106. It is rigidly connected to the mounting block 114 via the blade 118. Accordingly, the position of the scale signal receiver 110 in all degrees of freedom is dictated by the position of the mounting block 114 and hence dictated by the position of the second part of the machine to which the mounting block 114 is secured during use, and not by the scale 102 or other part inside the protective housing 110. However, this need not necessarily be the case. For instance, as is well known (and for instance described in US4595991), it is possible for the scale signal receiver 110 to be biased against the scale 102 and/or protective housing 106 via one or more bearings provided therebetween. In which case, normally an articulated linkage will be provided between the scale signal receiver 110 and the mounting block 114 (e.g. between the scale signal receiver 110 and the blade 118) to avoid over constraining the system.

Turning now to Figures 3 to 5, there is shown a supplemental contamination shield 130 according the present invention. As shown in Figures 3 to 5, in this embodiment the supplemental contamination shield 130 comprises an elongate extruded plastic plate which is attached to the protective housing 106. In particular, the supplemental contamination shield 130 has integral first 132 and second 134 ribs extending along its length which are shaped and sized so as to be received within the complementary first 152 and second 154 channels provided on the outside of protective housing 106, extending along its length. Such ribs and channels enable the supplemental contamination shield 130 to be clipped, or snap-fitted, onto the protective housing. As will be understood, the supplemental contamination shield 130 could be mounted onto the protective housing via other means, such as separate mechanical fasteners such as screws or bolts. Other means such as adhesive could be used, although it can be preferred that the means for securing the supplemental contamination shield 130 onto the protective housing is releasable, so that the supplemental contamination shield 130 can be removed.

As shown in Figure 3, the supplemental contamination shield 130 is sufficiently long (measured along the measurement direction of the encoder apparatus, in this case along the x-dimension) so as to extend along the entire length of the protective housing 106. As shown in Figure 4, the supplemental contamination shield 130 is sufficiently wide (or high) such that it hangs from the protective housing 106 and covers the gap 140 between the protective housing 106 and the mounting block 114. Accordingly, the supplemental contamination shield 130 could be described as having an anchor portion 136 which is configured to anchor the shield to the protective housing 106, and a skirt portion 138 which is suspended from the anchor portion 136 so as to provide some protection to the space/volume in which the readhead assembly moves.

As shown in Figure 4, the thickness of the supplemental contamination shield 130 is not constant along its profile. For instance, the anchor portion 136 has a thinner profile portion 142 between the first 132 and second 134 ribs than its profile at its first 132 and second 134 ribs and also the skirt portion 138. This is designed such that the supplemental contamination shield 130 will tend to bend along this thinner profile portion 142 during installation and removal, increasing the ease by which the first 132 and second 134 ribs can be attached to/detached from their complementary channels 152, 154 on the protective housing 106.

It is an advantage of the described embodiment that the supplemental contamination shield 130 can be installed after the encoder module 100 has been installed on the machine. Not only does this mean that the supplemental shield does not get in the way of the mounting steps, it can also enable the supplemental contamination shield 130 to lie very close to the readhead assembly's mounting block 114. In the particular embodiment described, the gap 144 between the skirt part 138 of the supplemental contamination shield 130 and the mounting block 114 of the readhead assembly 104 is less than 5mm, and in particular is approximately 1.5mm. If such a contamination shield 130 were provided as an integrated part of the encoder module, then it would be difficult to mount the readhead assembly's mounting block 114 on the second part of the machine 404 whilst maintaining such a close fit (unless the skirt part 138 were itself detachable/moveable, e.g. pivotable, with respect to the anchor part 136; but such configurations would make the supplemental contamination shield more expensive and complex).

The fact that the supplemental contamination shield 130 is mounted to the encoder module 100 itself (as opposed to being mounted to the machine) helps to achieve a very close fit with the encoder module, thereby improving its shielding ability. Furthermore, a close fit with the encoder module means that the profile of the supplemental contamination shield 130 can be kept low, i.e. such that it doesn't "stick-out" or "protrude" from the encoder module too far. For instance, in the embodiment described, the supplemental contamination shield 130 does not protrude from the sealed encoder module (i.e. from either the protective housing or the readhead) by more than 4mm. E.g. for any point on the outer facing side of the protective housing or the readhead (e.g. the side facing away from the part of the machine on which it is mounted) which is covered by the supplemental contamination shield, the shortest straight-line distance from that point to the outwardly facing side of the contamination shield (i.e. the side facing away from the protective housing and/or readhead) is not more than 4mm. Such a low-profile design makes it much easier to install and use in machines where space is tight. As shown in Figures 4 and 5, the anchor portion 136 of the supplemental contamination shield 130 can comprise one or more (in this embodiment two) support ribs 150 extending along its length, which are configured to abut the outer surface of the protective housing 106.

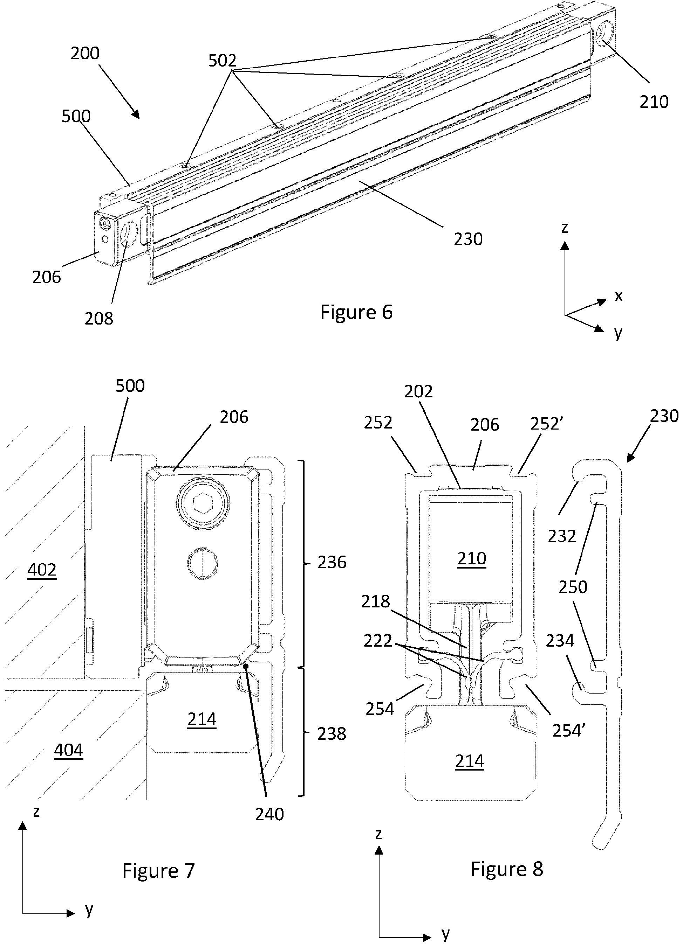

A slightly different configuration is described in connection with Figures 6 to 8. The encoder apparatus 200 of Figures 6 to 8 shares many similar parts with the encoder apparatus 100 of Figures 1 to 5, and so like parts share like reference numerals (although with the denomination of 200 instead of 100). In contrast to the encoder apparatus 106 of Figures 1 to 5, the protective housing 206 of the encoder apparatus 200 of Figures 6 to 8 is mounted to a first part 402 of the machine via a spar member 500. In particular, the spar member 500 is first mounted to the first part 402 of the machine (e.g. via one or more bolts - not shown) before the protective housing 206 is mounted to the spar member 500. The spar member 500 has an upper elongate ridge (not shown) which can be received in a first channel 252 provided on the outside of the protective housing 206, and a plurality of clamps/fingers (not shown) which can be tightened (e.g. via adjustment screws 502) so as to be received within a second channel 254 on the protective housing and thereby clamp the protective housing to the spar member 500 (and in turn be mounted to the first part 402 of the machine).

As shown, similar to the supplemental contamination shield 130 of Figures 1 to 5, the supplemental contamination shield 230 of Figures 6 to 8 has integral first 232 and second 234 ribs extending along its length which are shaped and sized so as to be received within the complementary third 252' and fourth 254' channels provided on the outside of protective housing 206, extending along its length. As best illustrated in Figure 8, the first 252 and third 252' channels, and the second 254 and fourth 254' channels are nominally identical in shape, size and position on the protective housing 206, and so the protective housing 206 could be mounted to the first part 402 of the machine either way around. As shown, the protective housing 206 also comprises first 208 and second 210 countersunk bolt holes at either end via which it can be mounted to the first part 402 of the machine, instead of, or as well as a member (such as the spar 500) which clamps to the protective housing 206 via the first 252 and second 254 channels.

It is also an advantage of the described embodiments that the supplemental contamination shield 130, 230 is mounted to the encoder assembly via mount features which are separate to the features which are used to mount the protective housing and readhead assembly (120/116) to the machine. This means that the supplemental contamination shield 130, 230 does not interfere with the mounting of the encoder module 100 on the machine. For example, in the embodiment of Figures 1 to 5, the supplemental contamination shield 130 is mounted to protective housing 106 via features separate to the protective housing's mount features 120, which means that the supplemental contamination shield 130 does not interfere with any thermal expansion mechanism provided by the protective housing's mount features 120. Accordingly, the supplemental contamination shield 130 does not interfere with the ability of the protective housing 106 to expand or contract relative to the part 402 of the machine on which it is mounted.

It is also an advantage of the described embodiments that the supplemental contamination shield 130, 230 is mounted to the encoder assembly via mount features which are separate to the features via which the protective housing and readhead assembly are mounted to the machine, because it means that the supplemental contamination shield 130, 230 can easily be removed without interfering with installation of the encoder module 100, 200 on the machine.

Accordingly, the supplemental contamination shield 130, 230 can be treated as a sacrificial protection barrier, which can easily be replaced if it gets damaged. Accordingly, it can be advantageous to make the supplemental contamination shield 130 low-cost. As explained above, it can be advantageous that the supplemental contamination shield 130, 230 is made via an extrusion process which is a low-cost manufacturing method, and also advantageous that it is made from plastic material which can be more cost effective than metallic materials. However, as will be understood, other manufacturing methods and materials can be used.

## Claims

1. An apparatus, comprising:
a sealed encoder module comprising a) a protective housing, and b) a relatively moveable member comprising a signal interacting part and a machine mount part, wherein the protective housing encapsulates at least the signal interacting part of the relatively moveable member to protect it from external contaminants, the protective housing having machine mount features for securing the protective housing to a first part of a machine and the machine mount part of the relatively moveable member comprises machine mount features for securing the relatively moveable member to a second, relatively moveable part of a machine; and
at least one supplemental contamination shield for mounting to one of, or either of: a) the protective housing or b) the relatively moveable member.

2. An apparatus as claimed in claim 1, in which the at least one supplemental contamination shield is configured for mounting to the protective housing.

3. An apparatus as claimed in claim 2, in which the at least one supplemental contamination shield is configured for mounting to the protective housing via features separate to the features which are used to mount the protective housing to the machine.

4. An apparatus as claimed in claim 2 or 3, in which the at least one supplemental contamination shield is configured to extend along substantially the entire extent of the protective housing.

5. An apparatus as claimed in any preceding claim, in which the at least one supplemental contamination shield is configured such that when it is mounted on the sealed encoder module it extends at least partly over both the protective housing and the machine mount part of the relatively moveable member so as to cover the gap between them.

6. An apparatus as claimed in any preceding claim, in which the at least one supplemental contamination shield comprises an anchor portion for mounting to one of, or either of: a) the protective housing or b) the relatively moveable member, and a skirt portion which is suspended therefrom, arranged such that when the anchor portion is mounted on either the relatively moveable member part or on the protective housing part, the skirt portion extends so as to at least partly cover the other part on which it is not mounted.

7. An apparatus as claimed in any preceding claim, configured such that the at least one supplemental contamination shield can be releasably fastened to one of, or either of: a) the protective housing or b) the relatively moveable member.

8. An apparatus as claimed in any preceding claim, in which the at least one supplemental contamination shield and one of, or both of: a) the protective housing and b) the relatively moveable member, have integral complementary shield mount features for enabling the supplemental contamination shield to be attached thereto.

9. An apparatus as claimed in any preceding claim, in which the sealed encoder module is a linear encoder module.

10. An apparatus as claimed in any preceding claim, in which:
the sealed encoder module comprises a scale located inside the protective housing such that it is protected from external contaminants,
the relatively moveable member comprises a readhead; and
the signal interacting part comprises a signal receiving part.

11. An apparatus as claimed in any preceding claim, in which the protective housing comprises a seal through which a blade-like member, which connects the relatively moveable member's signal interacting part which is located inside the protective housing and the relatively moveable member's machine mount part which is located outside of the protective housing, can pass.

12. An apparatus as claimed in claim 11, in which the seal comprises at least one pair of sealing lips.

13. A supplemental contamination shield for a sealed encoder apparatus, comprising an elongate plate-like member having i) an anchor portion comprising one or more mount features arranged along the length of the elongate plate-like member for connecting the elongate plate-like member to a sealed encoder apparatus, and ii) a skirt portion which is suspended therefrom.

14. An apparatus, comprising:
a sealed encoder module comprising, a) a protective housing, and b) a relatively moveable member comprising a signal interacting part and a machine mount part,
wherein the protective housing encapsulates at least the signal interacting part of the relatively moveable member to protect it from external contaminants, the protective housing having machine mount features via which the protective housing is secured to a first part of a machine and the machine mount part of the relatively moveable member comprises machine mount features via which the relatively moveable member is secured to a second, relatively moveable part of a machine; and
at least one supplemental contamination shield mounted to either a) the protective housing or b) the relatively moveable member.

15. A method of installing a sealed encoder module which comprises i) a protective housing and ii) a relatively moveable member comprising a signal interacting part and a machine mount part, wherein the protective housing encapsulates at least the signal interacting part to protect it from external contaminants, the protective housing having machine mount features for securing the protective housing to one part of a machine and wherein the machine mount part of the relatively moveable member comprises machine mount features for securing the relatively moveable member to another part of a machine, the method comprising:
in either order, mounting the protective housing to a first part of a machine via its machine mount features and mounting the relatively moveable member to the machine via the machine mount features on the machine mount part; and then
attaching at least one supplemental contamination shield to the protective housing or to the relatively moveable member.
